# FASCICULE DE BREVET EUROPEEN

(11) **EP 3 600 684 B1**
(45) Date de publication et mention de la délivrance du brevet: **25.05.2022**
(21) Numéro de dépôt: 18714335.9
(22) Date de dépôt: 20.03.2018
(51) Int. Cl.: B05B 7/08, A01C 23/00, C05G 3/00, C09K 17/00, B05B 1/26

(54) **BUSE POUR LA PULVERISATION DE PREPARATIONS LIQUIDES DE POLYMERES ET PROCEDE DE PULVERISATION METTANT EN OEUVRE LA BUSE**
DÜSE ZUM ZERSTÄUBEN FLÜSSIGER POLYMERZUBEREITUNGEN UND SPRÜHVERFAHREN UNTER VERWENDUNG DER DÜSE
NOZZLE FOR SPRAYING LIQUID POLYMER PREPARATIONS AND SPRAYING METHOD UTILISING THE NOZZLE

(30) Priorité: 23.03.2017 FR 1752419
(43) Date de publication de la demande: 05.02.2020
(73) Titulaire: SPCM SA, 42160 Andrézieux-Bouthéon (FR)
(72) Inventeur: LECOINTE, Charles, 42160 Andrezieux Boutheon (FR)
(74) Mandataire: Cabinet Laurent & Charras
(86) Numéro de dépôt international: PCT/FR2018/050668
(87) Numéro de publication internationale: WO 2018/172686

(56) Documents cités:
- JP-A- H1 149 805
- US-A- 3 875 697
- US-A- 4 361 285
- US-A- 4 735 359
- US-A1- 2006 064 844

## Description

L'invention concerne une buse de pulvérisation d'au moins deux liquides et plus particulièrement de préparations liquides de polymères hydrosolubles ou hydro-gonflants.

Les polymères hydrosolubles ou hydro-gonflants, dont notamment les polyacrylamides sont utilisés pour de multiples applications agricoles telles que pour limiter l'érosion hydraulique et éolienne des sols, pour contrôler les phénomènes de battance des sols pour ainsi favoriser la germination et l'émergence des cultures, sans pour autant se limiter à ces seuls intérêts.

La mise en œuvre de ces polymères se fait à ce jour essentiellement à travers l'eau d'irrigation. L'homme du métier peut en effet se référer à titre d'exemple au document intitulé *« Conservation Practices Standard, Anionic Polyacrylamide (PAM) Application, (Ac.), Code 450* » émanant du *"Natural Resources Conservation Service"* une agence de l'USDA. Des polyacrylamides peuvent être additionnés sous forme de poudre ou de blocs (document WO96002126) à l'eau d'irrigation de surface ou sous forme de préparation liquide dans un système sous pression (document WO9857531).

Certes, certaines méthodes d'épandage ou de pulvérisation de polymères hydrosolubles ou hydro-gonflants sous forme solide permettent de s'affranchir de l'utilisation de l'eau d'irrigation comme vecteur d'application mais elles sont contraignantes. En effet, l'épandage de polyacrylamides sous forme de poudre sur des sols agricoles implique des formulations spécifiques (document US7503143) ou des matériels spécifiques (document US2016120130) pour obtenir une répartition homogène du polymère sur le sol.

Les méthodes de pulvérisation par voie liquide restent donc préférées mais quelques difficultés techniques ou économiques restent à surmonter.

### Pulvérisation de solutions de polyacrylamides diluées

La nature colloïdale des polyacrylamides de haut poids moléculaires (> 10 millions Da) en solution aqueuse nécessite une dilution importante pour une pulvérisation au moyen de buses agricoles standards. Par exemple, selon Kincaid, D.C and Lentz, R.D. and Lehrsch, G.A (1996) Spray patterns from fan-type nozzles for applying PAM to soil surfaces. pp. 457-466. In: Proc. Of Conf. 27. Erosion control technology... bringing it home. USA-WA-Seattle, 1996/02/27-03/01. Int. Erosion Control Assoc., Steamboat Springs, CO., leur concentration en solution aqueuse ne doit pas excéder 900 ppm (0.9 % en masse) pour une pulvérisation au moyen d'un pulvérisateur agricole commun. De plus, la pression de pulvérisation doit être significativement augmentée pour éviter la coalescence du jet. Les moyens nécessaires pour pulvériser ces solutions aqueuses de polymère (quantité d'eau très importantes) sont donc limitatifs. A titre d'exemple, l'application de 10 kg de polyacrylamide sur une surface de 10000 mètres carrés (1 ha) à une concentration en solution aqueuse de 1200 ppm engendre l'utilisation de 8333 litres d'eau. Une telle quantité d'eau par unité de surface équivaut à une irrigation (FR3009307) ce qui est contraire à la volonté de s'affranchir de l'eau d'irrigation comme vecteur pour l'application de ces polymères.

Dans ce même document (Kincaid & al, 1996), l'application de polyacrylamide à la concentration de 3000 ppm nécessite d'abaisser les buses de pulvérisation à 38 mm du sol et de doubler le nombre de buses à cause de problèmes de coalescence de jets. Ce faisant, deux buses de pulvérisation ne permettent de pulvériser la suspension de polyacrylamide que sur 20 à 30 mm de largeur. Un tel procédé n'est pas industrialisable dès lors qu'il s'agit d'appliquer une quantité suffisante de ces polymères sur une surface agricole dans un temps raisonnable.

*Pulvérisation de solutions de polyacrylamide concentrées à l'aide d'un atomiseur.*

Le document FR1357705 propose d'utiliser des matériels spécifiques, en l'occurrence des atomiseurs rotatifs, pour générer de fines gouttes de taille uniforme à partir d'une préparation liquide concentrée de polymères hydrosolubles ou hydro-gonflants. Cette méthode qui a montré son efficacité ne nécessite pas de diluer la solution de polymère à pulvériser dans de grandes quantités d'eau. Toutefois, cette méthode nécessite des matériels spécifiques dont le coût ou l'entretien peuvent être un frein.

### Pulvérisation avec des buses à injection d'air

L'homme du métier pourrait pulvériser des préparations liquides concentrées de polyacrylamide telles que décrites dans le document FR1357705 à l'aide de buses à injection d'air (exemple de buse : document US4828182). Mais la faible quantité d'eau contenue dans ces préparations liquides limiterait l'efficacité des polyacrylamides. En effet, selon Gabriels et De Boodt Theoretical and practical approach for determining the optimal moisture content at the moment of soil conditioning. Mitt. Deutsch Bodenkund Gesel. 15, 185-203, l'humidité influence l'efficacité de conditionneurs de sols appliqués sur des sols agricoles. De plus, la quantité d'air comprimé et la pression nécessaire à la pulvérisation de produits épais à travers ce type de matériel nécessitent une consommation importante d'énergie qu'il est difficile de fournir à l'aide d'un engin de traction agricole ou d'un pulvérisateur automoteur. Enfin, puisqu'une préparation liquide concentrée de polyacrylamide présente une teneur élevée de matières solides non volatiles, le flux d'air comprimé aurait pour effet de sécher le produit pendant la pulvérisation, conduisant ainsi à l'application d'une poudre pulvérulente qui de plus, par son adhérence, collerait sur les parois de la buse pour colmater au final ses orifices étroits.

Aucune des méthodes précédemment mentionnées ne permet d'appliquer facilement une préparation aqueuse concentrée de polymères hydrosolubles ou hydro-gonflants et ceci encore moins en mélange avec d'autres substances difficilement miscibles (voir même non miscibles) et/ou incompatibles avec la solution aqueuse concentrée de polymère.

Quand bien même le fait que l'addition de polyacrylamides à l'eau d'irrigation permette de limiter le lessivage de certains herbicides (voir Oliver & al Minimising off-site movement of contaminants in furrow irrigation using polyacrylamide (PAM) I ; Pesticides, Australian Journal of soil Research 2006, 44, 551-560) soit connue, il existe peu d'information sur les bénéfices d'une telle association lors de l'applications concomitante du polyacrylamide et de l'herbicide. En effet, les deux produits sont difficilement miscibles de par la viscosité mais aussi la potentielle instabilité du mélange.

L'application de polyacrylamides en mélange avec un agent réticulant permet de réaliser une réaction de réticulation *in-situ* (documents US 3759857, US3875697, US3759197).

Ce procédé est intéressant, par exemple, pour lutter contre l'érosion éolienne. Toutefois, le mélange de polyacrylamides et d'agents réticulant constitue un milieu réactionnel dont la viscosité augmente avec le processus de réticulation jusqu'à l'obtention d'un produit ultime réticulé donc peu soluble ou insoluble. Un tel mélange est ainsi difficile à pulvériser. Réaliser le mélange au niveau de la buse de pulvérisation est une solution séduisante. Toutefois, le phénomène de réticulation à l'aide d'hypochlorite de sodium par exemple est une réaction rapide et la prise en masse du mélange réactionnel peut avoir lieu dans un mélangeur statique qui serait disposé juste en aval de la buse de pulvérisation provoquant son occlusion.

Le document US 2006/064844 A1 décrit une machine permettant de nettoyer les sols comportant un système permettant de mélanger le savon d'une part et de l'eau d'autre part. Le système est muni de deux chambres présentant chacune un orifice débouchant dont les axes sont sécants, combiné à un déflecteur positionné en aval d'un des 2 orifices débouchant.

Dans un domaine également différent de celui de la pulvérisation de polymères, le document US 4361285 A décrit une buse d'atomisation de matériaux non miscibles présentant deux chambres dans lesquelles s'écoulent 2 liquides, lesquels se mélangent en aval de l'orifice de sortie de chacune des chambres. La buse comprend en outre un troisième fluide constitué de gaz qui vient s'intercaler entre le déflecteur et le mélange des 2 liquides.

Dans un domaine également différent de celui de la pulvérisation de polymères, le document US 4735359 A décrit la combinaison de deux buses venant se positionner face à face, chacune d'elle étant apte à pulvériser un seul liquide. Les deux liquides se mélangent après que la trajectoire ait été préalablement modifiée par un déflecteur.

Donc, afin de répondre au besoin de pulvériser des solutions de polymères hydrosolubles ou hydro-gonflants, dont la teneur en masse de polymère est avantageusement comprise entre 0.01 % et 75 %, la Demanderesse a mis au point une buse, qui donne de plus la possibilité de les mélanger lors de la pulvérisation avec des substances pourtant incompatibles. La simplicité de cette buse la rend peu coûteuse et son utilisation engendre une faible consommation d'énergie. L'invention a ainsi pour objet une méthode de pulvérisation d'un mélange comprenant au moins un premier liquide sous la forme d'une préparation liquide de polymères hydrosolubles ou hydro-gonflants dont la teneur en masse de polymère est avantageusement comprise entre 0.01 % et 75 % et au moins un second liquide au moyen d'une buse dont les caractéristiques figurent ci-après.

L'invention a également pour objet une buse en tant que telle pour la pulvérisation simultanée d'au moins deux liquides pour la mise en œuvre dudit procédé, la buse comportant :
- un corps muni d'une première chambre dans laquelle circule un premier liquide et d'une seconde chambre dans laquelle circule un second liquide, chacune des deux chambres présentant un orifice débouchant à l'extérieur du corps,
- un déflecteur solidaire du corps agencé en aval d'au moins un des orifices débouchant, dans le sens de l'écoulement des premier et second liquides, ledit déflecteur étant apte à modifier la direction de l'écoulement des premiers et seconds liquides,
les orifices étant en pratique positionnés de manière concentrique l'un par rapport à l'autre de sorte à permettre le mélange des premiers et seconds liquides au plus tard au moment où ils entrent en contact avec le déflecteur.

Selon un mode de réalisation non couvert par les revendications , les axes des orifices débouchant des deux chambres constitutives du corps sont sécants de sorte que les premiers et seconds liquides se mélangent avant leur entrée en contact avec le déflecteur.

Plus préférentiellement l'axe d'un des orifices est positionné dans le sens longitudinal du corps.

Dans ce mode de réalisation spécifique, le déflecteur de la buse est positionné en aval de l'orifice dont l'axe est positionné dans le sens longitudinal du corps.

Dans le mode de réalisation couvert par les revendications, les orifices débouchant des deux chambres constitutives du corps sont positionnés de manière concentrique l'un par rapport à l'autre de sorte que les premiers et seconds liquides se mélangent au plus tard au moment où ils entrent en contact avec le déflecteur

Dans ce mode de réalisation, le déflecteur de la buse se présente avantageusement sous la forme d'un cône de révolution, dont le sommet est orienté vers les orifices débouchant et dont l'axe se confond avec l'axe desdits orifices.

Pour ce mode de réalisation, la distance entre le sommet du cône et le centre des orifices débouchant est avantageusement inférieure à 20 mm, plus avantageusement inférieur à 10 mm et encore plus avantageusement inférieur à 4 mm.

Comme déjà dit, un autre aspect de l'invention concerne une méthode de pulvérisation d'un mélange, comprenant au moins un premier liquide sous la forme d'une préparation liquide de polymères hydrosolubles ou hydro-gonflants dont la teneur en masse de polymère est comprise entre 0.01 % et 75 % et au moins un second liquide, mettant en œuvre la buse précédemment décrite. Plus préférentiellement, la teneur en masse de polymère pour le premier liquide est comprise entre 5 et 60 % et encore plus préférentiellement entre 10 et 50 %.

Enfin, l'invention concerne aussi l'utilisation de la buse décrite précédemment pour pulvériser au moins une préparation de polymères hydrosolubles ou hydro-gonflables dans les domaines de l'agriculture, plus particulièrement pour limiter l'érosion des sols, du traitement des eaux pluviales et usées, des procédés papetiers et de l'extraction minière.

Autrement dit, l'invention concerne également une méthode de pulvérisation d'un mélange, comprenant au moins un premier liquide sous la forme d'une préparation liquide de polymères hydrosolubles ou hydro-gonflants et au moins un second liquide, mettant en œuvre la buse Autrement dit, l'invention concerne également une méthode de pulvérisation d'un mélange, comprenant au moins un premier liquide sous la forme d'une préparation liquide de polymères hydrosolubles ou hydro-gonflants et au moins un second liquide, mettant en œuvre la buse précédemment décrite, et ce dans les domaines de l'agriculture, du traitement des eaux pluviales et usées, des procédés papetiers et de l'extraction minière.

L'invention et les avantages qui en découlent ressortiront des exemples ci-après, à l'appui des figures annexées.

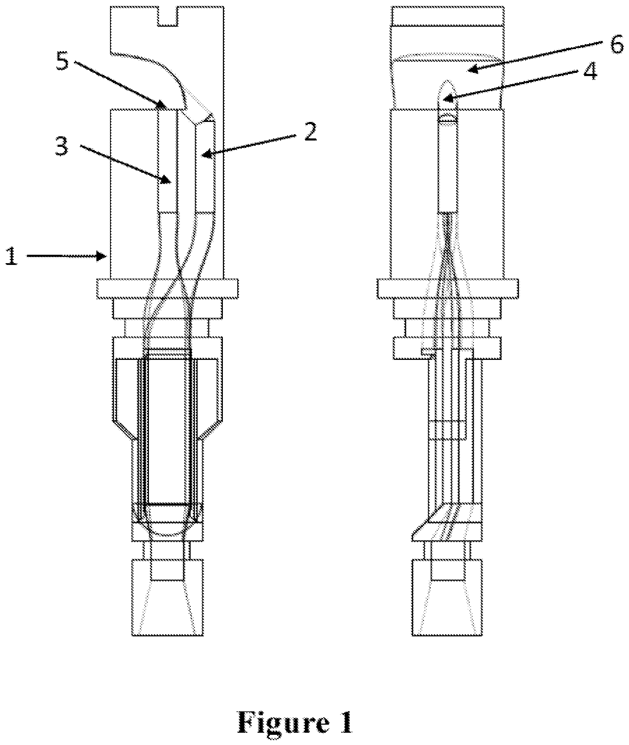

La Figure 1 décrit un mode de réalisation préféré de la buse de l'invention pour lequel le corps de la buse **1** comprend deux chambres **2** et **3** débouchant sur des orifices **4** et **5** dont les axes sont sécants avant le déflecteur **6.** L'axe de l'orifice **4** est positionné dans le sens longitudinal du corps **1** et les liquides qui sortent des orifices **4** et **5** se mélangent avant qu'ils entrent en contact avec le déflecteur **6**, lequel est situé en aval des orifices dans le sens du flux.

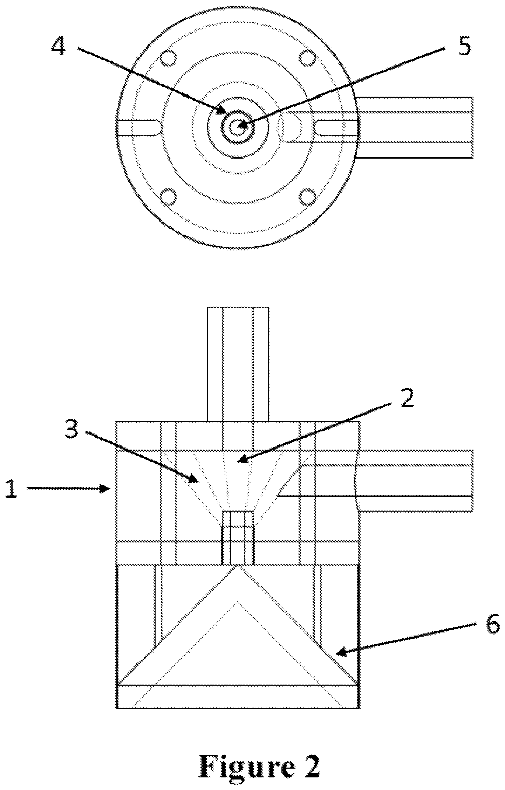

La Figure 2 décrit la buse de l'invention selon un second mode de réalisation préféré pour lequel le corps de la buse **1** comprend deux chambres **2** et **3** dont les orifices débouchant **4** et **5** sont positionnés de manière concentrique l'un par rapport à l'autre. Le déflecteur **6** a la forme d'un cône de révolution dont le sommet est orienté vers les orifices débouchant **4** et **5** et dont l'axe se confond avec l'axe desdits orifices, de sorte que les premiers et seconds liquides se mélangent au plus tard au moment de leur entrée en contact avec le déflecteur.

L'invention concerne aussi une méthode de pulvérisation d'un mélange comprenant au moins un premier liquide sous la forme d'une préparation liquide de polymères hydrosolubles ou hydro-gonflants dont la teneur en masse de polymère est de préférence comprise entre 0.01 % et 75 % et au moins un second liquide mettant en œuvre la buse décrite précédemment. Plus préférentiellement, la teneur en masse de polymère pour le premier liquide est comprise entre 5 et 60 % et encore plus préférentiellement entre 10 et 50 %.

Par définition, un polymère hydrosoluble est un polymère qui donne une solution aqueuse sans particules insolubles lorsqu'il est dissous sous agitation à 25°C et avec une concentration de 50 g.L⁻¹ dans l'eau.

Un polymère hydro-gonflant est un polymère qui gonfle et épaissit la solution aqueuse quand il est mis dans de l'eau à 25°C.

Pour la méthode de l'invention, le second liquide est aqueux ou organique ou un mélange des deux.

Encore plus préférentiellement, le second liquide se présente sous la forme d'une émulsion eau dans huile ou sous la forme d'une dispersion aqueuse de particules.

Selon un mode de réalisation préféré, pour la méthode de pulvérisation de l'invention le second liquide contient au moins une substance d'intérêt agronomique ou au moins une substance permettant d'améliorer le développement ou la croissance du matériel végétal, de préférence une substance choisie parmi les fertilisants, les hormones, les micro-organismes, les mycorhizes, les stimulateurs de croissance, les régulateurs de croissance, les produits phytosanitaires, par exemples les fongicides, les insecticides, les phyto-protecteurs.

Selon un autre mode de réalisation préféré, pour la méthode de pulvérisation de l'invention, au moins un second liquide contient au moins un agent réticulant.

Encore plus préférentiellement, l'agent réticulant est choisi dans le groupe comprenant les hypochlorites ou hypobromites de métal alcalin ou d'alcalino-terreux, les dialdéhydes de formule O=CH-(R)ₙ-CH=O pour lequel R est une chaine alkylène saturée de 1 à 8 carbones et n=0 ou 1.

Préférentiellement, pour la méthode de pulvérisation de l'invention, le premier liquide contenant un polymère hydrosoluble ou hydro-gonflant, se présente sous la forme d'une solution aqueuse homogène ou d'une émulsion eau dans huile ou d'une dispersion de particules de polymère en phase aqueuse.

Pour l'émulsion eau dans huile, le polymère hydrosoluble ou hydro-gonflant est dans des gouttelettes d'eau en suspension dans la phase mobile qu'est l'huile.

La dispersion de particules de polymère en solution aqueuse contient des particules d'au moins un polymère hydro-gonflable ou hydrosoluble en suspension dans une solution aqueuse contenant au moins un composé choisi parmi un sel minéral, un sel organique, un polymère organique dispersant et leurs mélanges.

Préférentiellement, pour la méthode de pulvérisation de l'invention au moins un polymère hydrosoluble ou hydro-gonflable contenu dans au moins un premier liquide à pulvériser selon le procédé de l'invention, est un copolymère d'acrylamide.

Avantageusement, les co-monomères de l'acrylamide sont des monomères non ioniques et/ou anioniques.

Le ou les monomères non ioniques peuvent être choisis, notamment, dans le groupe comprenant les monomères vinyliques solubles dans l'eau. Des monomères préférés appartenant à cette classe sont, par exemple le méthacrylamide, le N-isopropylacrylamide, le N,N-diméthylacrylamide et le N-méthylolacrylamide. Egalement, peuvent être utilisés la N-vinylformamide, le N-vinyl acetamide, la N-vinylpyridine et la N-vinylpyrrolidone, l'acryloyl morpholine (ACMO) et la diacétone acrylamide.

Le ou les monomères anioniques peuvent être choisis choisi parmi l'acide acrylique, l'acide méthacrylique, l'acide itaconique, l'acide maléique, l'acide 2-acrylamido-2-méthylpropane sulfonique (ATBS), l'acide vinyl sulfonique, l'acide vinyl phosphonique, ledit monomère anionique étant non salifié, partiellement ou totalement salifié.

Le dernier aspect de l'invention concerne l'utilisation de la buse de l'invention pour pulvériser au moins une préparation de polymères hydrosolubles ou hydro-gonflables dans les domaines de l'agriculture, plus particulièrement pour limiter l'érosion des sols, du traitement des eaux pluviales et usées, des procédés papetiers et de l'extraction minière.

Dans le domaine de l'agriculture et plus particulièrement pour l'érosion des sols, le polymère hydrosoluble ou hydro-gonflable est avantageusement pulvérisé de façon concomitante avec au moins un second liquide contenant au moins une substance d'intérêt agronomique ou au moins une substance permettant d'améliorer le développement ou la croissance d'un matériel végétal.

Les avantages de la buse de l'invention, du procédé de pulvérisation au moyen de cette buse et son utilisation ont illustrés à la lumière des exemples qui vont suivre, mais ne sont pas limités à ceux-ci.

### Exemple 1 : Pulvérisation d'un mélange concentré de polyacrylamide de haut poids moléculaire.

Selon la méthode de l'invention des mélanges concentrés de polyacrylamide de haut poids moléculaire ont été pulvérisés à l'aide d'une buse miroir bi-liquides équipée de deux orifices de sortie distincts.

Cette buse (correspondant à la Figure 1) a été modélisée en trois dimensions puis imprimée par un procédé additif en PET à l'aide d'une imprimante « Ultimaker 2+ ». La longueur totale de la buse est de 67 mm, le diamètre de la section comportant le déflecteur de 12 mm, le diamètre des orifices des chambres de 2 mm et enfin la surface du déflecteur est de 112 mm².

La buse a ensuite été équipée des joints nécessaires avant d'être introduite dans un support de buse modèle « Airjet Bi-Fluid » de la marque Teejet. Ce support de buse est normalement utilisé pour de la pulvérisation à injection d'air. Son usage a été détourné pour permettre l'adduction de deux liquides vers la buse préalablement dessinée et imprimée.

De l'eau a été mise en circulation dans la chambre 3 de la buse et différentes préparations liquides concentrées de polyacrylamides dans la chambre 2.

Les polyacrylamides sont des copolymères d'acrylamide et d'acrylate de sodium (70/30, % mol) de poids moléculaire entre 10 et 20 millions de Daltons.

Les préparations liquides concentrées (25 % en masse) utilisées sont décrites dans le tableau suivant :

| Préparation | Formulation |
|---|---|
| A | Dispersion aqueuse |
| B | Emulsion eau dans huile |

Le débit de chaque liquide et les concentrations en polymère des mélanges ainsi pulvérisés sont indiqués dans le tableau suivant :

| Essai | Préparation | Débit (L/min) | Débit Eau (L/min). | Concentration en polymère du mélange pulvérisé (% en masse) |
|---|---|---|---|---|
| 1 | A | 0,3 | 2,2 | 3 |
| 2 | B | 0,4 | 2,2 | 3,85 |

Nous obtenons une pulvérisation en nappe homogène sur une largeur de plus de 40 cm.

Selon Kincaid & al (1996) les polymères employés ne peuvent pas être pulvérisés correctement à une concentration supérieure à 900 ppm en masse (0,9 % en masse). Avec le procédé de l'invention, les mêmes polymères ont pu être pulvérisés à une concentration plus de 30 fois supérieure.

### Exemple 2 : Réticulation in situ de polyacrylamide.

Une méthode de réticulation *in-situ* de polyacrylamide a été mise en œuvre afin de stabiliser un sol comme décrit dans le document « Crosslinking of acrylamide polymers » US3759857 mais en mettant en œuvre la buse et la méthode de pulvérisation de l'invention.

Une préparation liquide de polyacrylamide (poids moléculaire environ 100 000 Da) et une solution d'hypochlorite de sodium (agent réticulant) ont été mise en circulation dans chacune des chambre 2 et 3 de la buse de pulvérisation (identique à celle de l'exemple 1).

L'objectif était que les deux liquides se mélangent au contact de la surface du déflecteur (aussi appelé miroir) de la buse.

La table ci-dessous récapitule les paramètres de pulvérisation utilisés :

| Chambre de la buse | Liquide (% en masse dans l'eau) | Débit (mL/min) | Concentration en matière active dans le mélange pulvérisé g/L) |
|---|---|---|---|
| 2 | Polyacrylamide 11,5% | 400 | 24,9 |
| 3 | Hypochlorite de sodium 0,1% | 1450 | 0,8 |

Plusieurs buses ont été disposées sur une rampe de pulvérisation afin d'appliquer aisément le mélange de polymère et de réticulant à la surface de bacs remplis d'un sol sableux. Une fois le mélange appliqué, la réticulation induit la formation d'une couche stabilisatrice en surface du sol.

A noter que les buses de pulvérisation sont facilement nettoyées après pulvérisation. Aucune réticulation et donc aucun colmatage n'est intervenu à l'intérieur du matériel de pulvérisation.

## Revendications

1. Méthode de pulvérisation d'un mélange comprenant au moins un premier liquide sous la forme d'une préparation liquide de polymères hydrosolubles ou hydro-gonflants et au moins un second liquide **caractérisée en ce qu'**elle met en œuvre une buse (1) pour la pulvérisation simultanée d'au moins deux liquides comportant :
• un corps muni d'une première chambre (2) dans laquelle circule chaque premier liquide et d'une seconde chambre (3) dans laquelle circule chaque second liquide, chacune des deux chambres présentant un orifice débouchant (4, 5) à l'extérieur du corps,
• un déflecteur (6) solidaire du corps agencé en aval d'au moins un des orifices (4, 5) débouchant, dans le sens de l'écoulement des premier et second liquides, ledit déflecteur étant apte à modifier la direction de l'écoulement des premier et second liquides.

2. Méthode de pulvérisation selon la revendication 1, **caractérisée en ce que** les orifices (4, 5) sont positionnés l'un par rapport à l'autre de sorte à permettre le mélange des premier et second liquides au plus tard au moment où ils entrent en contact avec le déflecteur.

3. Méthode de pulvérisation selon l'une des revendications précédentes, **caractérisée en ce que** les axes des orifices (4, 5) sont sécants de sorte que les premier et second liquides se mélangent avant leur entrée en contact avec le déflecteur.

4. Méthode de pulvérisation selon l'une des revendications précédentes, **caractérisée en ce que** l'axe d'un des orifices (4, 5) est positionné dans le sens longitudinal du corps.

5. Méthode de pulvérisation selon la revendication 4, **caractérisée en ce que** le déflecteur (6) est positionné en aval de l'orifice (4, 5) dont l'axe est positionné dans le sens longitudinal du corps.

6. Méthode de pulvérisation selon la revendication 2, **caractérisée en ce que** les orifices débouchant (4, 5) sont positionnés de manière concentrique l'un par rapport à l'autre de sorte que les premiers et seconds liquides se mélangent au plus tard au moment de leur entrée en contact avec le déflecteur (6).

7. Méthode de pulvérisation selon la revendication 6, **caractérisée en ce que** le déflecteur (6) se présente sous la forme d'un cône de révolution dont le sommet est orienté vers les orifices débouchant (4, 5) et dont l'axe se confond avec l'axe desdits orifices (4, 5).

8. Méthode de pulvérisation selon l'une des revendications 1 à 7, **caractérisée en ce qu'**au moins un second liquide est aqueux ou organique ou un mélange des deux.

9. Méthode de pulvérisation selon l'une des revendications 1 à 8, **caractérisée en ce qu'**au moins un second liquide se présente sous la forme d'une émulsion eau dans huile ou sous la forme d'une dispersion aqueuse de particules.

10. Méthode de pulvérisation selon l'une des revendications 1 à 9, **caractérisée en ce qu'**au moins un second liquide contient au moins une substance d'intérêt agronomique ou au moins une substance permettant d'améliorer le développement ou la croissance du matériel végétal.

11. Méthode de pulvérisation selon l'une des revendications 1 à 10, **caractérisée en ce qu'**au moins un second liquide contient au moins un agent réticulant.

12. Méthode de pulvérisation selon l'une des revendications 1 à 11, **caractérisée en ce qu'**au moins un premier liquide est un copolymère d'acrylamide.

13. Méthode de pulvérisation selon l'une des revendications 1 à 12, **caractérisée en ce que** la teneur en masse de polymère est comprise entre 0.01 % et 75 %, de préférence entre 5 et 60 % et encore plus préférentiellement entre 10 et 50 %.

14. Méthode de pulvérisation selon l'une des revendications 1 à 13, **caractérisée en ce qu'**elle est mise en œuvre dans les domaines de l'agriculture, plus particulièrement pour limiter l'érosion des sols, du traitement des eaux pluviales et usées, des procédés papetiers et de l'extraction minière.

15. Buse pour la pulvérisation simultanée d'au moins deux liquides comportant :
• un corps muni d'une première chambre (2) dans laquelle circule un premier liquide et d'une seconde chambre (3) dans laquelle circule un second liquide, chacune des deux chambres présentant un orifice débouchant (4, 5) à l'extérieur du corps,
• un déflecteur (6) solidaire du corps agencé en aval d'au moins un des orifices débouchant (4, 5), dans le sens de l'écoulement des premier et second liquides, ledit déflecteur (6) étant apte à modifier la direction de l'écoulement des premier et second liquides,
**caractérisée en ce que** les orifices débouchant (4, 5) sont positionnés de manière concentrique l'un par rapport à l'autre de sorte que les premiers et seconds liquides se mélangent au plus tard au moment où ils entrent en contact avec le déflecteur (6) et **en ce que** le déflecteur (6) se présente sous la forme d'un cône de révolution dont le sommet est orienté vers les orifices débouchant (4, 5) et dont l'axe se confond avec l'axe desdits orifices (4, 5).

## Patentansprüche

1. Verfahren zur Zerstäubung einer Mischung mit mindestens einer ersten Flüssigkeit in Form einer flüssigen Zubereitung wasserlöslicher oder wasseraufnehmender Polymere und mindestens einer zweiten Flüssigkeit, **dadurch gekennzeichnet, dass** dabei eine Düse (1) zur gleichzeitigen Zerstäubung von mindestens zwei Flüssigkeiten eingesetzt wird, die enthält:
• einen Körper, ausgestattet mit einer ersten Kammer (2), in der jeweils die erste Flüssigkeit zirkuliert und einer zweiten Kammer (3) in der jeweils die zweite Flüssigkeit zirkuliert und jede dieser beiden Kammern verfügt über eine Öffnung (4, 5), die außerhalb des Körpers mündet,
• einen Deflektor (6), fest verbunden mit dem Körper, angeordnet vor mindestens einer der Öffnungen (4, 5), mündend in Fließrichtung der ersten und zweiten Flüssigkeit, wobei dieser Deflektor in der Lage ist, die Fließrichtung der ersten und zweiten Flüssigkeit zu verändern.

2. Zerstäubungsverfahren nach Anspruch 1, **dadurch gekennzeichnet, dass** die einzelnen Öffnungen (4, 5) jeweils in Bezug zur anderen positioniert sind, so dass eine Mischung der ersten und zweiten Flüssigkeit spätestens in dem Augenblick, in dem sie in Kontakt mit dem Deflektor kommen, stattfindet.

3. Zerstäubungsverfahren nach einem der vorangehenden Ansprüche, **dadurch gekennzeichnet, dass** die Achsen der Öffnungen (4, 5) sich schneiden, so dass die erste und die zweite Flüssigkeit sich vermischen, bevor sie in Kontakt mit dem Deflektor kommen.

4. Zerstäubungsverfahren nach einem der vorangehenden Ansprüche, **dadurch gekennzeichnet, dass** die Achse einer der Öffnungen (4, 5) in Längsrichtung des Körpers positioniert ist.

5. Zerstäubungsverfahren nach Anspruch 4, **dadurch gekennzeichnet, dass** der Deflektor (6) vor der Öffnung (4, 5) positioniert ist, deren Achse in Längsrichtung des Körpers positioniert ist.

6. Zerstäubungsverfahren nach Anspruch 2, **dadurch gekennzeichnet, dass** die Öffnungen (4, 5) konzentrisch zueinander positioniert sind, so dass die erste und zweite Flüssigkeit sich spätestens in dem Augenblick, in dem sie in Kontakt mit dem Deflektor kommen, vermischen (6).

7. Zerstäubungsverfahren nach Anspruch 6, **dadurch gekennzeichnet, dass** der Deflektor (6) die Form eines Kreiskegels hat, dessen Spitze hin zu den Öffnungsmündungen (4, 5) orientiert ist und dessen Achse mit der der erwähnten Öffnungen (4, 5) übereinstimmt.

8. Zerstäubungsverfahren nach einem der Ansprüche 1 bis 7, **dadurch gekennzeichnet, dass** mindestens eine zweite Flüssigkeit wässrig oder organisch oder eine Mischung aus beiden ist.

9. Zerstäubungsverfahren nach einem der Ansprüche 1 bis 8, **dadurch gekennzeichnet, dass** diese mindestens eine Flüssigkeit die Form einer Emulsion Wasser in Öl hat, oder die Form einer wässrigen Partikeldispersion.

10. Zerstäubungsverfahren nach einem der Ansprüche 1 bis 9, **dadurch gekennzeichnet, dass** mindestens eine zweite Flüssigkeit mindestens eine Substanz von landwirtschaftlichem Interesse enthält, oder mindestens eine Substanz zur Verbesserung der Entwicklung oder des Wachstums von pflanzlichem Material.

11. Zerstäubungsverfahren nach einem der Ansprüche 1 bis 10, **dadurch gekennzeichnet, dass** mindestens eine zweite Flüssigkeit mindestens einen Vernetzer enthält.

12. Zerstäubungsverfahren nach einem der Ansprüche 1 bis 11, **dadurch gekennzeichnet, dass** mindestens eine erste Flüssigkeit ein Acrylamid-Copolymer ist.

13. Zerstäubungsverfahren nach einem der Ansprüche 1 bis 12, **dadurch gekennzeichnet, dass** der Massengehalt an Polymer zwischen 0.01 % und 75 %, besser noch zwischen 5 und 60 % und noch besser zwischen 10 und 50 % liegt.

14. Zerstäubungsverfahren nach einem der Ansprüche 1 bis 13, **dadurch gekennzeichnet, dass** es im Bereich der Landwirtschaft eingesetzt wird, genauer gesagt zur Begrenzung der Bodenerosion, der Behandlung von Regen- und Abwasser, Papierherstellungsverfahren und der Mineralgewinnung.

15. Düse zur gleichzeitigen Zerstäubung von mindestens zwei Flüssigkeiten, die enthält:
• einen Körper mit einer ersten Kammer (2), in der eine erste Flüssigkeit zirkuliert und mit einer zweiten Kammer (2) in der eine zweite Flüssigkeit zirkuliert, wobei jede dieser beiden Kammern über eine Öffnung (4, 5) verfügt, die außerhalb des Körpers mündet,
• einen Deflektor (6), fest verbunden mit dem Körper, angeordnet vor mindestens einer der Öffnungen (4, 5), mündend in Fließrichtung der ersten und zweiten Flüssigkeit, wobei dieser Deflektor in der Lage ist, die Fließrichtung der ersten und zweiten Flüssigkeit zu verändern,
**dadurch gekennzeichnet, dass** die Mündungsöffnungen (4, 5) konzentrisch zueinander positioniert sind, so dass die erste und zweite Flüssigkeit sich spätestens in dem Augenblick, in dem sie in Kontakt mit dem Deflektor kommen, vermischen (6) und dass der Deflektor (6) die Form eines Kreiskegels hat, dessen Spitze hin zu den Öffnungsmündungen (4, 5) orientiert ist und dessen Achse mit der dieser Öffnungen (4, 5) übereinstimmt.

## Claims

1. Method for spraying a mixture comprising at least a first liquid in the form of a liquid preparation of water-soluble or water-swellable polymers and at least a second liquid **characterized in that** it implements a nozzle (1) for simultaneously spraying at least two liquids including:
• a body provided with a first chamber (2) within which each first liquid flows and a second chamber (3) within which each second liquid flows, each of the two chambers having a through-hole (4, 5) on the outside of the body,
• a deflector (6) secured to the body arranged downstream from at least one of the through-holes (4, 5),in the direction of flow of the first and second liquids, said deflector being capable of modifying the direction of flow of the first and second liquids.

2. Method for spraying according to claim 1, **characterized in that** the holes (4, 5) are positioned in relation to one another so as to allow the mixing of the first and second liquids at the latest when they come into contact with the deflector.

3. Method for spraying according to one of the preceding claims, **characterized in that** the axes of the holes (4, 5) are secant such that the first and second liquids mix before they come into contact with the deflector.

4. Method for spraying according to one of the preceding claims, **characterized in that** the axis of one of the holes (4, 5) is positioned in the longitudinal direction of the body.

5. Method for spraying according to claim 4, **characterized in that** the deflector (6) is positioned downstream from the hole (4, 5), the axis whereof is positioned in the longitudinal direction of the body.

6. Method for spraying according to claim 2, **characterized in that** the through-holes (4, 5) are positioned concentrically in relation to one another such that the first and second liquids mix at the latest when they come into contact with the deflector (6).

7. Method for spraying according to claim 6, **characterized in that** the deflector (6) assumes the form of a cone of revolution wherein the apex is oriented towards the through-holes (4, 5) and wherein the axis is combined with the axis of said holes (4, 5).

8. Method for spraying according to one of claims 1 to 7, **characterized in that** at least a second liquid is aqueous or organic or a mixture of the two.

9. Method for spraying according to one of claims 1 to 8, **characterized in that** at least a second liquid assumes the form of a water in oil emulsion or the form of an aqueous dispersion of particles.

10. Method for spraying according to one of claims 1 to 9, **characterized in that** at least a second liquid contains at least one substance of agronomic interest or at least one substance making it possible to improve the development or the growth of the plant material.

11. Method for spraying according to one of claims 1 to 10, **characterized in that** at least a second liquid contains at least one cross-linking agent.

12. Method for spraying according to one of claims 1 to 11, **characterized in that** at least a first liquid is an acrylamide copolymer.

13. Method for spraying according to one of claims 1 to 12, **characterized in that** the weight content of polymer is between 0.01% and 75%, preferably between 5 and 60% and still more preferably between 10 and 50%.

14. Method for spraying according to one of claims 1 to 13, **characterized in that** it is implemented in the fields of agriculture, more particularly in order to limit soil erosion, rainwater and wastewater treatment, paper making methods and mining extraction.

15. Nozzle for simultaneously spraying at least two liquids including:
• a body provided with a first chamber (2) within which a first liquid flows and a second chamber (3) within which a second liquid flows, each of the two chambers having a through-hole (4, 5) on the outside of the body,
• a deflector (6) secured to the body arranged downstream from at least one of the through-holes (4, 5),in the direction of flow of the first and second liquids, said deflector (6) being capable of modifying the direction of flow of the first and second liquids,
**characterized in that** the through-holes (4, 5) are positioned concentrically in relation to one another such that the first and second liquids mix at the latest when they come into contact with the deflector (6) and **in that** the deflector (6) assumes the form of a cone of revolution the apex whereof is oriented toward the through-holes (4, 5) and the axis whereof is combined with the axis of said holes (4, 5).
